# EUROPÄISCHE PATENTSCHRIFT

(11) **EP 0 413 933 B1**
(45) Veröffentlichungstag und Bekanntmachung des Hinweises auf die Patenterteilung: **19.10.1994**
(21) Anmeldenummer: 90112329.9
(22) Anmeldetag: 28.06.1990
(51) Int. Cl.: B60N 2/06

(54) **Abdeckvorrichtung für die Sitzverstellung eines Kraftfahrzeugs**
Covering for the seat adjustment for a motor vehicle
Dispositif de recouvrement pour le réglage de siège d'un véhicule automobile

(30) Priorität: 19.08.1989 DE 3927379
(43) Veröffentlichungstag der Anmeldung: 27.02.1991
(73) Patentinhaber: Brose Fahrzeugteile GmbH & Co. KG, 96450 Coburg (DE)
(72) Erfinder: Treichl, Markus, D-8630 Coburg (DE)
(74) Vertreter: Ninnemann, Detlef, Dipl.-Ing.

(56) Entgegenhaltungen:
- DE-A- 2 701 698
- FR-A- 2 566 070
- PATENT ABSTRACTS OF JAPAN vol. 12, no. 183 (M-703)(3030) 28 Mai 1988,& JP-A-62 295737

## Beschreibung

Die Erfindung betrifft eine Abdeckvorrichtung für die Sitzverstellung eines Kraftfahrzeugs nach dem Oberbegriff des Anspruchs 1.

Zur Veränderung der Sitzposition eines Kraftfahrzeuginsassen sind zumindest die vorderen Fahrzeugsitze in Längsrichtung verschiebbar auf dem Chassis des Kraftfahrzeugs angeordnet, wobei eine mit dem Kraftfahrzeugsitz verbundene Oberschiene gleitend in einer mit dem Chassis des Kraftfahrzeugs verbundenen Unterschiene so gelagert ist, daß infolge hakenförmiger Vorsprünge an der Ober- und Unterschiene eine feste Verbindung des Kraftfahrzeugsitzes mit dem Chassis des Kraftfahrzeugs eingehalten wird. Zur Arretierung der jeweiligen Stellung des Kraftfahrzeugsitzes und zur Bewegung des Kraftfahrzeugsitzes in der einen oder anderen Längsrichtung ist in der Unterschiene eine Zahnstange angeordnet, die Teil eines Bewegungsmechanismus bildet, der bei motorisch verstellbaren Kraftfahrzeugsitz ein in die Zahnstange eingreifendes Ritzel enthält, das mit einem Elektromotor verbunden ist.

Dabei wird in der vordersten Position des Kraftfahrzeugsitzes die in der Unterschiene gelagerte Zahnstange zum Teil freigelegt, da die Oberschiene und damit das in Fahrtrichtung des Kraftfahrzeugs hintere Ende des Kraftfahrzeugsitzes beabstandet zum hinteren Ende der Unterschiene und damit der Zahnstange ist.

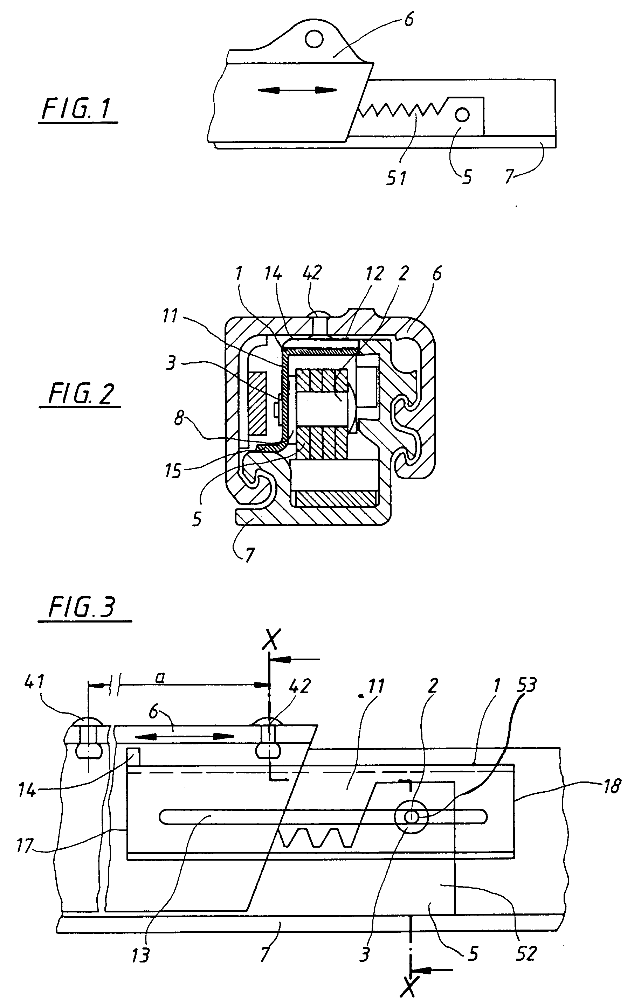

Wie der Darstellung gemäß Figur 1 zu entnehmen ist, liegt die in der Unterschiene 7 angeordnete Zahnstange 5 in dieser vordersten Stellung des Kraftfahrzeugsitzes und damit der Oberschiene 6 frei, so daß die nach oben gerichteten Zähne 51 der Zahnstange 5 sichtbar sind.

Da zur Verringerung der Reibung und als Schutz vor Korrosion die Zahnstange eingefettet ist, besteht in dieser Stellung die Gefahr, daß hinter dem längsverstellbaren Kraftfahrzeugsitz im Fond des Kraftfahrzeugs befindliche Passagiere durch das auf der Zahnstange 5 befindliche Fett beschmutzt werden bzw. daß Schmutzteile auf die Zahnstange gelangen und damit den Bewegungsmechanismus des Kraftfahrzeugsitzes blockieren können.

Eine noch größere Gefahr besteht in dieser Stellung darin, daß auf den freiliegenden Teil der Zahnstange 5 gelangende Teile bei einem anschließenden Rückfahren des Kraftfahrzeugsitzes zwischen Oberschiene und Zahnstange eingeklemmt werden, was gleichzeitig eine erhebliche Verletzungsgefahr eines im Fond befindlichen Passagiers bedeutet, wenn sich Körperteile des Fond-Passagiers auf der Zahnstange befinden. Schließlich bildet die freiliegende Zahnstange in der vordersten Stellung des in Längsrichtung verstellbaren Kraftfahrzeugsitzes einen unschönen Anblick, vor allem dann, wenn nach längerem Gebrauch des Kraftfahrzeugs das auf der Zahnstange befindliche Fett verschmutzt ist.

Aufgabe der vorliegenden Erfindung ist es, eine Abdeckvorrichtung für die Sitzverstellung eines Kraftfahrzeugs zu schaffen, die in jeder Stellung des Kraftfahrzeugsitzes das Verstellelement verdeckt und somit eine Verschmutzungs-, Einklemm- und Verletzungsgefahr beseitigt und einen optisch schönen Anblick der Sitzverstellung bietet.

Diese Aufgabe wird durch das kennzeichnende Merkmal des Anspruchs 1 gelöst.

Die erfindungsgemäße Lösung beseitigt die Verschmutzungsgefahr für einen hinter dem in Längsrichtung verstellbaren Kraftfahrzeugsitz befindlichen Fond-Passagier durch das auf dem Verstellelement befindliche Fett sowie ein Blockieren des Verstellmechanismus durch auf das Verstellelement gelangende Teile, eliminiert die Einklemm- und Verletzungsgefahr für den Fond-Passagier bei einer Verstellung des Kraftfahrzeugsitzes, indem sie ihn vor einer Berührung des Verstellelements schützt und schafft eine optisch elegante Lösung, da in jeder Stellung des Kraftfahrzeugsitzes der Bewegungsmechanismus für die Längsverstellung des Kraftfahrzeugsitzes abgedeckt und somit für das Betrachterauge nicht sichtbar ist.

Abdeckvorrichtungen für mechanisch bewegte Teile sind als solche bekannt.

Aus der DE-C-2 701 698 ist eine Abdeckvorrichtung zum Schutz von Führungsbahnen an Werkzeugsmaschinen bekannt, die aus mehreren teleskopartig ineinanderschiebbaren Abdeckkästen besteht, die sich aus einer parallel zur Führungsbahnebene verlaufenden Deckwand sowie zwei in Führungsbahnlängsrichtung verlaufende Seitenwände und aus einer senkrecht zur Führungsbahnebene verlaufende Rückwand zusammensetzen.

Zusätzlich vorgesehene waagerechte und senkrechte Gleitvorrichtungen auf der Führungsbahn und an den Führungsbahnseiten dienen zur Abstützung der Abdeckvorrichtung, wobei die senkrechten Gleitvorrichtungen zum Hintergreifen der Führungsbahn als Schnäpper ausgebildet sind, deren Schnäpperzungen nach innen zeigen.

Eine derartige Abdeckvorrichtung ist jedoch sehr aufwendig und würde bei der Verwendung zur Abdeckung einer Sitzverstellung eines Kraftfahrzeuges aufgrund ihrer engen Toleranzen und der Tatsache, daß die Abdeckvorrichtung im bodennahen Bereich erheblichen Verschmutzungen ausgesetzt ist, leicht blockieren und damit zerstört werden bzw. eine Verstellung des Kraftfahrzeugsitzes in Längsrichtung behindern.

Eine vorteilhafte Ausgestaltung der erfindungsgemäßen Lösung ist dadurch gekennzeichnet, daß die senkrechte Wand des Winkelelements ein sich in Längsrichtung erstreckendes Langloch aufweist, in das ein mit dem Verstellelement verbundener Zapfen eingreift und daß eine mit dem Zapfen verbundene Sicherungsscheibe das Winkelelement in konstantem Abstand zum Verstellelement hält.

Infolge dieser Ausgestaltung der erfindungsgemäßen Lösung ist eine sichere Führung des die Abdeckung bildenden Winkelelements gewährleistet und gleichzeitig sichergestellt, daß das Winkelelement in jeder Stellung des Kraftfahrzeugsitzes das einen Teil des Bewegungsmechanismus des Kraftfahrzeugsitzes darstellende Verstellelement abdeckt.

Eine vorteilhafte Weiterbildung der erfindungsgemäßen Lösung ist dadurch gekennzeichnet, daß die Länge des Winkelelements so bemessen ist und die Mitnehmer in solchem Abstand zueinander angeordnet sind, daß der in Fahrtrichtung gesehen hintere Mitnehmer bei in Fahrtrichtung vorderster Stellung des Kraftfahrzeugsitzes am Vorsprung des Winkelelements anliegt und das Winkelelement das Verstellelement vollständig abdeckt und daß der in Fahrtrichtung gesehen vordere Mitnehmer bei in Fahrtrichtung hinterster Stellung des Kraftfahrzeugsitzes am Vorsprung anschlägt und das in Fahrtrichtung hintere Ende des Winkelelements bündig mit dem Ende der Unterschiene abschließt.

Durch diese Dimensionierung wird sichergestellt, daß zum einen das die Abdeckung bildende Winkelelement in der hinteresten Stellung des Kraftfahrzeugsitzes nicht über die Außenkante der Ober- bzw. Unterschiene und damit der Rückenfläche des Kraftfahrzeugsitzes hinaussteht und in der vordersten Stellung des Kraftfahrzeugsitzes eine vollständige Abdeckung des Verstellelements gewährleistet ist.

Eine vorteilhafte Weiterbildung der erfindungsgemäßen Lösung ist dadurch gekennzeichnet, daß das der waagerechten Wand des Winkelelements entgegengesetzte Ende der senkrechten Wand einen waagerecht verlaufenden, auf der Unterschiene aufliegenden Schenkel und die waagerechte Wand eine stufenförmig abgewinkelte, auf der Unterschiene gleitend aufliegende, sich in Längsrichtung erstreckende Seitenkante aufweist.

Durch diese Weiterbildung der erfindungsgemäßen Lösung ist eine sichere Auflage der Abdeckung auf der Unterschiene und damit eine sichere Führung des Winkelelements gewährleistet sowie eine dichte Anlage des Winkelelements zur vollständigen Abdeckung des Verstellelements sichergestellt.

Das Verstellelement kann dabei wahlweise aus einer Zahnstange, einer Spindel eines Spindelantriebs oder einem gleichartigen Teil des Verstellmechanismus einer Sitzverstellung bestehen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Figur 1: eine schematische Seitenansicht eines Teils des Verstellmechanismus eines Kraftfahrzeugsitzes ohne Abdeckvorrichtung;
- Figur 2: einen Querschnitt durch den Verstellmechanismus eines Kraftfahrzeugsitzes mit Abdeckvorrichtung;
- Figur 3: eine Seitenansicht des hinteren Teils der Unter- bzw. Oberschiene der Längsverstellung eines Kraftfahrzeugsitzes mit Abdeckung;
- Figur 4: eine perspektivische Ansicht eines Winkelelements zur Abdeckung der Sitzverstellung;
- Figur 5: einen Querschnitt durch das Winkelelement gemäß Figur 4 und
- Figur 6: eine Seitenansicht des Winkelelements gemäß den Figuren 4 und 5.

Der in Figur 2 dargestellte Querschnitt durch den Verstellmechanismus eines Kraftfahrzeugsitzes zeigt eine mit dem Kraftfahrzeugchassis verbundene Unterschiene 7, in der gleitend eine Oberschiene 6 gelagert und durch ineinanderhakende Vorsprünge gesichert ist. In der Unterschiene 7 ist eine Zahnstange 5 als Verstellelement befestigt, die Teil eines Bewegungsmechanismus zur vorzugsweise elektromotorischen Verstellung des Kraftfahrzeugsitzes bildet. Alternativ kann die Zahnstange durch die Spindel eines Spindelantriebs oder dergleichen ersetzt werden.

Ein in dieser Ausführungsform Z-förmiges Winkelelement 1 ist an einem Zapfen 2 an der Vernietung der Zahnstange 5 mittels eine Sicherungsscheibe 3 befestigt und gegenüber der Zahnstange 5 durch eine Zwischenscheibe 8 beabstandet angeordnet. Das Winkelelement 1 setzt sich aus einer senkrechten Wand 11, die parallel zur senkrechten Wand der Zahnstange 5 verläuft und einer waagerechten Wand 12 zusammen, die beabstandet oberhalb der Zahnstange 5 und damit der Zähne 51 der Zahnstange 5 verläuft.

Ein von der senkrechten Wand 11 an dem der waagerechten Wand 12 gegenüberliegenden Ende der senkrechten Wand 11 senkrecht abstehender Schenkel 15 liegt gleitend auf einem entsprechenden Vorsprung der Unterschiene 7 auf. Die oberhalb der Zahnstange 5 verlaufende und damit die Oberseite der Zahnstange 5 abdeckende waagerechte Wand 12 weist einen Vorsprung 14 auf, der gegen Mitnehmer 41, 42 anschlägt, die im Abstand zueinander in der Oberschiene 6 befestigt sind. Der Vorsprung 14 ist am in Fahrtrichtung des Kraftfahrzeugs vorderen Ende der waagerechten Wand 12 einen Vorderkantenabschluß bildend angeordnet.

Figur 3 verdeutlicht in einer Seitenansicht des Verstellmechanismus die Anordnung der in der Oberschiene befestigten und in einem Abstand a zueinander angeordneten Mitnehmer 41, 42 sowie die Ausbildung eines Langlochs 13 in der senkrechten Wand 11 des Winkelelements 1. Die Mitnehmer 41, 42 sind als in die Oberschiene 6 eingesetzte Bolzen oder als Durchstellungen in der Oberschiene 6 ausgebildet.

Das Langloch 13 in der senkrechten Wand 11 des Winkelelements 1 dient zur Aufnahme des Zapfens 2, so daß das Winkelelement 1 in gleichbleibendem Abstand von der Zahnstange 5 angeordnet ist, wobei die Sicherungsscheibe 3 die Lage des Winkelelements 1 sichert. Der Zapfen 2 ist in einem in Fahrtrichtung hinteren Endabschnitt 52 der Zahnstange 5 angeordnet und durch eine Bohrung 53 in der Zahnstange 5 gesteckt.

Bei einem Verschieben des Kraftfahrzeugsitzes und damit der Oberschiene 6 in Längsrichtung des Kraftfahrzeugs gelangt je nach Verschiebungsrichtung der vordere Mitnehmer 41 oder der hintere Mitnehmer 42 in der Oberschiene 6 in Eingriff mit dem Vorsprung 14 am in Fahrtrichtung vorderen stirnseitigen Ende des Winkelelements 1 und verschiebt somit je nach Verstellrichtung des Kraftfahrzeugsitzes das Winkelelement 1 in der einen oder anderen Richtung.

In der hintersten Stellung des Kraftfahrzeugsitzes schlägt der in Fahrtrichtung vordere Mitnehmer 41 an den Vorsprung 14 des Winkelelements 1 an, das in dieser Stellung mit seinem rückwärtigen, stirnseitigen Ende mit der Unter- bzw. Oberschiene 6, 7 abschließt. Gleichzeitig befindet sich das in Fahrtrichtung vordere Ende des Langloches 13 in geringem Abstand vom Zapfen 2, so daß Fertigungstoleranzen ausgeglichen werden können.

Bei einem Verschieben des Kraftfahrzeugsitzes in Fahrtrichtung entfernt sich der vordere Mitnehmer 41 vom Vorsprung 14 des Winkelelements 1, während infolge des Abstands a zwischen dem vorderen Mitnehmer 41 und dem hinteren Mitnehmer 42 der hintere Mitnehmer 42 noch nicht gegen den Vorsprung 14 anschlägt, so daß das Winkelelement 1 in dieser Stellung verharrt. Bei einer weiteren Bewegung des Kraftfahrzeugsitzes in Fahrtrichtung stößt schließlich der hintere Mitnehmer 42 gegen den Vorsprung 14 und verschiebt somit das Winkelelement 1 ebenfalls in Fahrtrichtung, jedoch nur so weit, daß die Hinterkante 18 des Winkelelements 1 in der vordersten Stellung des Kraftfahrzeugsitzes mit der Hinterkante der Zahnstange 5 bündig abschließt.

In dieser Stellung ist somit die Zahnstange 5 vollständig durch das Winkelelement 1 abgedeckt, das in seiner Länge so bemessen ist, daß der normalerweise freiliegende Teil der Zahnstange 5 zwischen der Hinterkante der Oberschiene 6 und der Hinterkante der Zahnstange 5 vollständig abgedeckt ist.

Beim Verstellen des Kraftfahrzeugsitzes entgegen der Fahrtrichtung schlägt schließlich der vordere Mitnehmer 41 gegen den Vorsprung 14 an und verschiebt das Winkelelement 1 zusammen mit der Oberschiene 6, so daß die Verzahnung 51 der Zahnstange 5 für das Antriebsritzel des Verstellmechanismus des Kraftfahrzeugsitzes freigegeben wird.

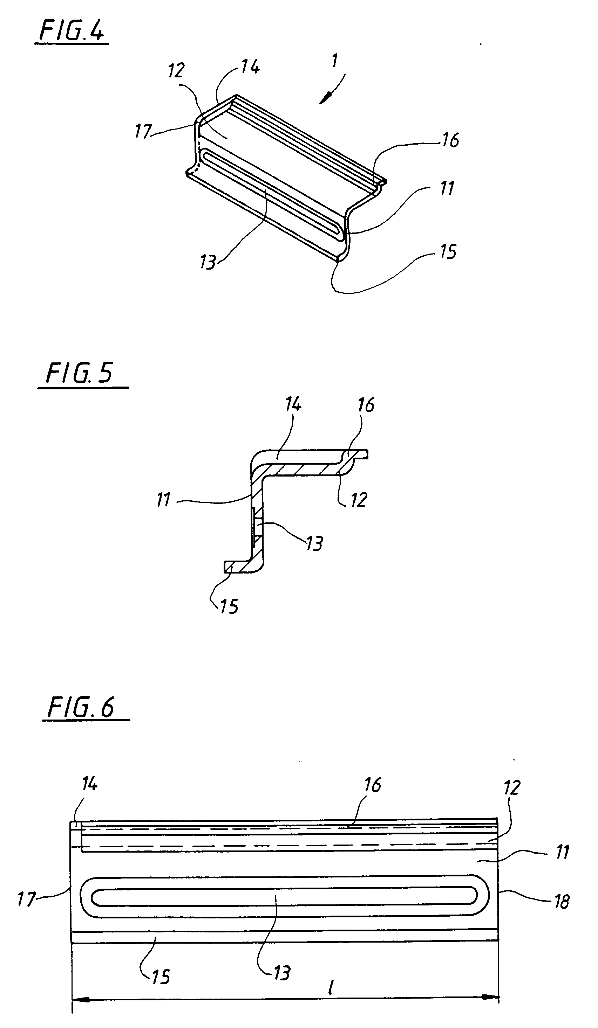

Die in den Figuren 4 bis 6 in einer perspektivischen Ansicht, im Querschnitt und in einer Seitenansicht dargestellte Konfiguration des Winkelelements 1 verdeutlicht eine bevorzugte Ausführungsform dieses Winkelelements zur Abdeckung der Zahnstange des Verstellmechanismus eines Kraftfahrzeugsitzes.

Die senkrechte Wand 11 des Winkelelements weist über nahezu seine gesamte Länge ein Langloch 13 auf, in das der Zapfen 2 gemäß den Figuren 2 und 3 eingreift und in dem die Sicherungsscheibe 3 gelagert ist. Vom unteren Ende der senkrechten Wand 11 geht senkrecht ein Schenkel 15 ab, der im montierten Zustand des Winkelelements 1 auf einem Vorsprung der Unterschiene 7 aufliegt.

Die waagerechte Wand 12 ist am vorderen stirnseitigen Ende 17 des Winkelelements 1 mit einem Vorsprung 14 versehen, der senkrecht nach oben absteht.

Das der senkrechten Wand 11 des Winkelelements 1 entgegengesetzte Ende der waagerechten Wand 12 ist mit einer stufenförmigen Seitenkante 16 versehen, die gleitend auf dem oberen Teil der Unterschiene 7 gemäß Figur 2 aufliegt. Infolge des Schenkels 15 und der stufenförmigen Seitenkante 16 wird ein Verkippen des Winkelelements 1 im montierten Zustand verhindert, so daß stets eine sichere Anlage des Winkelelements 1 und damit der Abdeckung für den Verstellmechanismus des Kraftfahrzeugsitzes gewährleistet ist. Gleichzeitig wird dadurch verhindert, daß Schmutzpartikel in den Verstellmechanismus gelangen und diesen gegebenenfalls blockieren können.

Das Winkelelement kann wahlweise aus Blech oder aus Kunststoff bestehen, wobei eine Kunststoff-Ausführung des Winkelelements 1 ein nur geringes zusätzliches Gewicht bedeutet und beim Verstellen des Kraftfahrzeugsitzes in Längsrichtung des Kraftfahrzeugs keine wesentliche Geräuschentwicklung mit sich bringt.

In einer alternativen Ausführungsform kann das Winkelelement aus zwei oder mehr gleitend ineinander verschiebbaren Winkelelementteilen bestehen, die teleskopartig gegeneinander verschiebbar ausgeführt sind. Auf diese Weise kann auch bei geringem vorhandenen Platz eine geeignete Abdeckung vorgesehen werden, die die Vorzüge der vorstehend dargestellten Abdeckvorrichtung aufweist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen, jedoch im Rahmen der nachstehenden Patentansprüche bleiben.

## Patentansprüche

1. Abdeckvorrichtung für die Sitzverstellung eines Kraftfahrzeugs mit einer mit dem Chassis des Kraftfahrzeugs verbundenen Unterschiene (7), auf der eine mit dem Kraftfahrzeugsitz verbundene Oberschiene (6) in Längsrichtung des Kraftfahrzeugs gleitend angeordnet ist und die mit einem Verstellelement (5) verbunden ist, das Teil des Bewegungsmechanismus für die Verstellung des Kraftfahrzeugsitzes ist,
**gekennzeichnet durch**
ein parallel zum Verstellelement (5) verlaufendes Winkelelement (1), dessen senkrechte Wand (11) in Längsrichtung gleitend am Verstellelement (5) befestigt ist und dessen waagerechte Wand (12) oberhalb des Verstellelements (5) verläuft und an ihrer Außenseite einen Vorsprung (14) aufweist, an dem zwei in Längsrichtung auf beiden Seiten des Vorsprungs (14) angeordnete, mit der Oberschiene (6) verbundene und zueinander beabstandete Mitnehmer (41, 42) bei einer Bewegung der Oberschiene (6) in der einen oder anderen Längsrichtung anschlagen und das Winkelelement (1) in Längsrichtung des Kraftfahrzeugs verschieben.

2. Abdeckvorrichtung nach Anspruch 1 , **dadurch gekennzeichnet**, daß die senkrechte Wand (11) des Winkelelements (1) ein sich in Längsrichtung erstreckendes Langloch (13) aufweist, in das ein mit dem Verstellelement (5) verbundener Zapfen (2) eingreift und daß eine mit dem Zapfen (2) verbundene Sicherungsscheibe (3) das Winkelelement (1) in konstantem Abstand zum Verstellelement (5) hält.

3. Abdeckvorrichtung nach Anspruch 1 oder 2, **dadurch gekennzeichnet,** daß die Länge des Winkelelements (1) so bemessen ist und die Mitnehmer (41, 42) in solchem Abstand zueinander angeordnet sind, daß der in Fahrtrichtung gesehen hintere Mitnehmer (42) bei in Fahrtrichtung vorderster Stellung des Kraftfahrzeugsitzes am Vorsprung (14) des Winkelelements (1) anliegt und das Winkelelement (1) das Verstellelement (5) vollständig abdeckt und daß der in Fahrtrichtung gesehen vordere Mitnehmer (41) bei in Fahrtrichtung hinterster Stellung des Kraftfahrzeugsitzes am Vorsprung (14) anschlägt und das in Fahrtrichtung hintere Ende des Winkelelements (1) bündig mit dem Ende der Unterschiene (7) abschließt.

4. Abdeckvorrichtung nach einem der vorangehenden Ansprüche, **dadurch gekennzeichnet,** daß das der waagerechten Wand (12) des Winkelelements (1) entgegengesetzte Ende der senkrechten Wand (11) einen waagerecht verlaufenden, auf der Unterschiene (7) aufliegenden Schenkel (15) aufweist.

5. Abdeckvorrichtung nach einem der vorangehenden Ansprüche, **dadurch gekennzeichnet,** daß die waagerechte Wand (12) eine stufenförmig abgewinkelte, auf der Unterschiene (7) gleitend aufliegende, sich in Längsrichtung erstreckende Seitenkante (16) aufweist.

6. Abdeckvorrichtung nach einem der vorangehenden Ansprüche, **dadurch gekennzeichnet,** daß der Vorsprung (14) am in Fahrtrichtung des Kraftfahrzeugs vorderen Ende der waagerechten Wand (12) einen Vorderkantenabschluß bildend angeordnet ist.

7. Abdeckvorrichtung nach einem der vorangehenden Ansprüche, **dadurch gekennzeichnet,** daß der Zapfen (2) in eine Bohrung (53) des Verstellelements (5) eingesetzt ist, die im in Fahrtrichtung hinteren Endabschnitt (51) des Verstellelements (5) angeordnet ist.

8. Abdeckvorrichtung nach einem der vorangehenden Ansprüche, **dadurch gekennzeichnet,** daß die Mitnehmer (41, 42) als in die Oberschiene (6) eingesetzte Bolzen oder als Durchstellungen in der Oberschiene (6) ausgebildet sind.

9. Abdeckvorrichtung nach einem der vorangehenden Ansprüche, **dadurch gekennzeichnet,** daß das Verstellelement (5) aus einer Zahnstange oder einer Spindel eines Spindelantriebs besteht.

10. Abdeckvorrichtung nach einem der vorangehenden Ansprüche, **dadurch gekennzeichnet,** daß das Winkelelement (1) aus zwei oder mehr in Längsrichtung teleskopförmig gegeneinander verschiebbare Winkelelementteile zusammengesetzt ist.

## Claims

1. Cover device for the seat adjustment of a vehicle with a lower rail (7) connected to the vehicle chassis wherein an upper rail (6) connected to the vehicle seat is mounted on the lower rail for sliding movement in the longitudinal direction of the vehicle and wherein the upper rail is connected to an adjustment element (5) which is part of the movement mechanism for adjusting the vehicle seat,
characterised by
an angular element (1) running parallel to the adjustment element (5) and whose vertical wall (11) is fixed on the adjustment element (5) for sliding movement in the longitudinal direction and whose horizontal wall (12) runs above the adjustment element (5) and has on its outside a projection (14) which during movement of the upper rail (6) in one or other longitudinal direction acts as a stop for two entrainment members (41,42) which are mounted longitudinally spaced from each other in the longitudinal direction either side of the projection and which are connected to the upper rail (6) and slide the angular element (1) in the longitudinal direction of the vehicle.

2. Cover device according to claim 1, characterised in that the vertical wall (11) of the angular element has a longitudinally extending oblong hole (13) in which engages a journal (2) which is connected to the adjustment element (5) and that a security disc (3) connected to the journal (2) holds the angular element (1) at a constant distance from the adjustment element (5).

3. Cover device according to claim 1 or 2 characterised in that the length of the angular element (1) is so measured and the entrainment members (41,42) are set at such a distance from each other so that the rear entrainment member (42) seen in the travel direction adjoins the projection (14) of the angular element (1) when the vehicle seat is in the furthest forward position in the travel direction , and the angular element (1) completely covers the adjustment element (5), and that the front entrainment member (41) seen in the travel direction stops against the projection (14) when the vehicle seat is in the furthest back position in the travel direction and the rear end of the angular element in the travel direction closes flush with the end of the lower rail (7).

4. Cover device according to one of the preceding claims, characterised in that the end of the vertical wall (11) opposite the horizontal wall (12) of the angular element (1) has a horizontally aligned arm (15) resting on the lower rail (7).

5. Cover device according to one of the preceding claims, characterised in that the horizontal wall (12) has a stepped angled longitudinally extending side edge (16) resting for sliding movement on the lower rail (7).

6. Cover device according to one of the preceding claims, characterised in that the projection (14) is mounted on the front end of the horizontal wall (12) in the travel direction of the vehicle to form a closure for the front edge.

7. Cover device according to one of the preceding claims, characterised in that the journal (2) is inserted in a bore (53) of the adjustment element (5) which is mounted in the rear end section (51) of the adjustment element (5) in the travel direction.

8. Cover device according to one of the preceding claims, characterised in that the entrainment members (41, 42) are designed as bolts inserted in the upper rail (6) or as breaks in the upper rail (6).

9. Cover device according to one of the preceding claims, characterised in that the adjustment element (5) consists of a gear rod or a spindle of a spindle drive.

10. Cover device according to one of the preceding claims, characterised in that the angular element (1) is made up of two or more angular parts telescopically displaceable relative to each other in the longitudinal direction.

## Revendications

1. Dispositif de recouvrement pour le mécanisme de réglage du siège d'un véhicule automobile comportant un rail inférieur (7) qui est relié au châssis du véhicule automobile, sur lequel un rail supérieur (6) relié au siège du véhicule automobile est disposé pour coulisser dans la direction longitudinale du véhicule automobile, et qui est relié à un élément de réglage (5) qui fait partie du mécanisme de déplacement pour le réglage du siège du véhicule automobile, caractérisé par un élément plié (1) qui s'étend parallèlement à l'élément de réglage (5), dont la paroi verticale (11) est fixée sur l'élément de réglage (5) pour coulisser en direction longitudinale et dont la paroi horizontale (12) s'étend au-dessus de l'élément de réglage (5) et présente sur sa face extérieure une saillie (14) sur laquelle, lors d'un déplacement du rail supérieur (6) dans l'un ou l'autre sens longitudinal, deux taquets d'entraînement (41, 42) disposés des deux côtés de la saillie (14) en direction longitudinale, reliés au rail supérieur (6) et écartés l'un de l'autre butent et déplacent l'élément plié (1) dans la direction longitudinale du véhicule automobile.

2. Dispositif de recouvrement selon la revendication 1, caractérisé en ce que la paroi verticale (11) de l'élément plié (1) présente un trou oblong (13) qui s'étend en direction longitudinale et dans lequel pénètre une broche (2) reliée à l'élément de réglage (5), et en ce qu'un disque de fixation (3) relié à la broche (2) maintient l'élément plié (1) à distance constante de l'élément de réglage (5).

3. Dispositif de recouvrement selon la revendication 1 ou 2, caractérisé en ce que la longueur de l'élément plié (1) est dimensionnée, et les taquets d'entraînement (41, 42) sont disposés à une distance l'un de l'autre, de façon que dans la position du siège du véhicule automobile la plus en avant dans le sens de la marche, le taquet d'entraînement (42) postérieur, vu dans le sens de la marche, s'appuie contre la saillie (14) de l'élément plié (1) et que l'élément plié (1) recouvre complètement l'élément de réglage (5), et de façon que dans la position du siège du véhicule automobile la plus en arrière dans le sens de la marche, le taquet d'entraînement (41) antérieur, vu dans le sens de la marche, bute contre la saillie (14) et que l'extrémité de l'élément plié (1), postérieure dans le sens de la marche, se termine à fleur avec l'extrémité du rail inférieur (7).

4. Dispositif de recouvrement selon l'une des revendications précédentes, caractérisé en ce que l'extrémité, de la paroi verticale (11), opposée à la paroi horizontale (12) de l'élément plié (1) présente une aile (15) s'étendant horizontalement et reposant sur le rail inférieur (7).

5. Dispositif de recouvrement selon l'une des revendications précédentes, caractérisé en ce que la paroi horizontale (12) présente un bord latéral (16) plié en forme de gradin, reposant pour glisser sur le rail inférieur (7) et s'étendant dans la direction longitudinale.

6. Dispositif de recouvrement selon l'une des revendications précédentes, caractérisé en ce que la saillie (14) est disposée sur l'extrémité antérieure, dans le sens de la marche du véhicule automobile, de la paroi horizontale (12), en formant une terminaison du bord antérieur.

7. Dispositif de recouvrement selon l'une des revendications précédentes, caractérisé en ce que la broche (2) est insérée dans un alésage (53), de l'élément de réglage (5), qui est disposé dans le tronçon postérieur (51), dans le sens de la marche, de l'élément de réglage (5).

8. Dispositif de recouvrement selon l'une des revendications précédentes, caractérisé en ce que les taquets d'entraînement (41, 42) sont réalisés sous la forme de chevilles insérées dans le rail supérieur (6) ou sous forme d'endroits traversants dans le rail supérieur (6).

9. Dispositif de recouvrement selon l'une des revendications précédentes, caractérisé en ce que l'élément de réglage (5) est constitué d'une crémaillère ou d'une tige filetée d'une commande à tige filetée.

10. Dispositif de recouvrement selon l'une des revendications précédentes, caractérisé en ce que l'élément plié (1) est composé de deux ou de plusieurs parties d'élément plié qui peuvent être déplacées télescopiquement l'une par rapport à l'autre dans la direction longitudinale.
